# EUROPEAN PATENT APPLICATION

(11) **EP 4 024 227 A1**
(43) Date of publication of application: **06.07.2022**
(21) Application number: 21150292.7
(22) Date of filing: 05.01.2021
(51) Int. Cl.: G06F 16/2457

(54) **MACHINE IDENTIFICATION OF ORIGINAL TRANSACTION IN LARGE TRANSACTION DATASETS**

(71) Applicant: Marqeta, Inc., Oakland, CA 94612 (US)
(72) Inventor: POWELL, Timothy, Oakland, California 94612 (US); OSBURN, Daniel, Oakland, California 94612 (US); SALLA, Jatin, Oakland, California 94612 (US); MONTECILLO, Amiel, Oakland, California 94612 (US)
(74) Representative: Harden, Henry Simon

(57) **Abstract**

Server computers of card issuer-processors can identify an original transaction record, from among millions of stored transaction records relating to card processing transactions, based on data values of a particular input transaction and a plurality of filtering operations representing base criteria for an original transaction, first criteria strongly indicative of an original transaction, and second criteria that are weakly indicative of an original transaction. Real-time, high-speed, scalable processing is implemented for use in a high-volume transaction request-response system for payment networks or other digital data networks that are sensitive to latency.

## Description

### TECHNICAL FIELD

One technical field of the present disclosure is computers programmed to execute high-speed, high-volume transactions and messaging including under ISO 8583, Base II and other formats. Another technical field is computer-implemented searching, filtering and matching in large datasets.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Online computer-implemented card transaction systems are architected to process thousands to millions of transactions, each involving a request, decision logic, transformation of data, and response, within brief time periods and with mandatory fixed maximum times for processing. These systems are termed real-time transaction systems because they are required to generate digital data requests, execute decision logic, transform data, and respond with other digital data within milliseconds to seconds while real-world activities are occurring, such as consumer purchases at a point of sale. Attributes of these systems include processing times and a scale of throughput and transaction volume that far exceed human capacity and require computer implementation.

The implementation of these services requires the use of distributed systems of computers in which end-user computing devices, point of sale systems, application servers or other systems of customers, servers of service providers, and servers of payment networks are independent and usually geographically distant from one another. Therefore, high-speed request-response message communication is required among the functional elements of the system. A particular transaction may comprise many messages that are related and that are similar but not identical in content. In some cases, an original message for a transaction, and a later message for the same transaction, may be separated in time by the transmission of thousands or millions of other messages for different transactions.

Further, in some transaction processing protocols, the accurate processing of a later message requires locating the original message that initiated a transaction. In large-scale systems, locating the original message may require inspecting millions of messages. There is no single value, discrete criteria or set of data attributes that can be used reliably to find an exact match to the original message. Systems operating in this manner consume unnecessary CPU cycles, network bandwidth, memory and storage usage to load messages, read attribute values, perform comparison operations, and branch to failure code or loopback logic. There is a need to reduce these and other technical consequences of high-volume search problems in high-speed, distributed transaction processing systems and to have a reliable basis of matching transactions.

### SUMMARY

The appended claims may serve as a summary of the invention.

### BRIEF DESCRIPTION OF THE DRAWINGS

In the drawings:
FIG. 1A illustrates a distributed computer system showing the context of use and principal functional elements with which one embodiment could be implemented.
FIG. 1B is a flow diagram of one embodiment of an algorithm that can be programmed to implement the disclosure.
FIG. 2 is a flow diagram of another embodiment of an algorithm that can be programmed to implement the disclosure.
FIG. 3 illustrates a computer system with which one embodiment could be implemented.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

The text of this disclosure, in combination with the drawing figures, is intended to state in prose the algorithms that are necessary to program a computer to implement the claimed inventions, at the same level of detail that is used by people of skill in the arts to which this disclosure pertains to communicate with one another concerning functions to be programmed, inputs, transformations, outputs and other aspects of programming. That is, the level of detail set forth in this disclosure is the same level of detail that persons of skill in the art normally use to communicate with one another to express algorithms to be programmed or the structure and function of programs to implement the inventions claimed herein.

Embodiments are described in sections below according to the following outline:
1. General Overview
2. Structural Overview
3. Functional Overview
4. Implementation Example - Hardware Overview

### 1. GENERAL OVERVIEW

The disclosure provides computer-implemented methods for identifying an original transaction record relating to an input transaction record from among millions of transaction records. The size or scale of the datasets that are subject to searching and contain candidate transactions records, in combination with a need for high-speed, real-time response to requests for an original transaction record while other transactions are occurring or while other systems are in wait states, mandate computer implementation as described in the disclosure. Real-time response requirements also motivate the use of programmatic fuzzy matching techniques that seek a best match of the input transaction record to a set of candidate transaction records and are capable of rapidly filtering thousands to millions of records in the set to form a reduced set of likely matching records. The programmed filtering techniques represent the inventors' discovery, in an inventive moment, of tests, comparisons, or filter operations on specific transaction data attributes that are most likely to yield the correct original transaction record or a subset of candidate transaction records that are likely to include the original transaction record.

Card issuer-processors implement certain payment card processing functions using high-speed server computers and computing instances. The payment card may be a virtual card, plastic credit card, charge card or other form of payment card. These systems support transaction services for business entities or for Consumers, who are individuals who buy products or services from Customers, which are business entities. Requests, data, and responses concerning the movement of money or value among accounts occur using Payment Networks. Some services also act as an issuer of virtual payment cards to Consumers on behalf of Customers. Issuing banks also issue cards and link cards to Consumer accounts. Some services also act as a Payment Processor and Card Issuing Proxy for Customers so that Customers do not need to implement these functions themselves. All the aforementioned parties use distributed systems of computers that are linked by open internetworks and private, secure payment networks.

A transaction is an electronic message that carries information used for payment processing. A transaction may be represented in digital storage as an association of attributes or values that are capable of digital storage, and may be implemented as a programmatic object, data structure, JSON blob, database row, or other form of organized digital data storage in an electronic data storage device or memory. A transaction may be a request message or a response message. Transactions usually originate when cardholders attempt payments, either at a physical point of sale or online. In an embodiment, an issuer/processor computer system is programmed to issue payment cards and process transactions originated from these cards. A transaction is represented by a transaction object, which may be formed programmatically, digitally stored in a data store, and referenced in various methods or messages.

In an embodiment, transactions facilitate the following processes. Authorization - The process of confirming whether a card is valid, business rules are met, and funds are sufficient, and then placing a temporary hold on those funds. Clearing - The process of finalizing the hold on funds and posting the transaction on the cardholder's account. This process is triggered by the merchant's capture request. Settlement - The process of transferring the funds between the merchant's and the cardholder's banks. Consequently, the most common transaction types are authorizations and clearings.

Transactions can be authorized, cleared, and settled either as dual-message transactions or as single-message transactions. The processing method may vary depending upon the payment method issuer, the type of card, or the region in which the transaction takes place. In a single-message transaction, the merchant submits a single electronic message containing all data required for the authorization, clearing, and settlement of the transaction. In a dual-message transaction, at the time of purchase, the merchant submits an electronic message containing the information required for an authorization decision. At a later point in time, the merchant submits a second message containing additional data required for clearing and settlement.

Other transaction types include: PIN debit transactions - These transactions occur when a cardholder attempts to make a payment using their PIN via an applicable debit network. Such a transaction typically contains all information required for authorization and clearing in a single electronic message. Reversals - These transactions occur when a merchant cancels a transaction after the authorization has succeeded but before the clearing has taken place. Reversals may also be partial, so that only part of the initial authorization hold is released. Refunds - These transactions occur when a cardholder requests a merchant to return the funds for a transaction after the clearing has completed for it. Chargebacks - These transactions occur when the issuer/processor disputes a completed transaction on behalf of the cardholder.

Embodiments are implemented in the context of high-speed, real-time response distributed computer systems that are architected and deployed to process millions of concurrent transactions and request-response protocols that require queries, filtering, selection, and response within milliseconds to tenths of seconds. Large-scale, fast-response databases or in-memory data repositories are typically used to achieve these parameters of scale and speed. The disclosure provides an efficient, accurate computer-executable process of filtering thousands to millions of digitally stored transaction records, each having numerous attribute values, to identify an original transaction or request relating to a particular transaction or request having an arbitrary relationship in time to the original transaction. The particular transaction may be received asynchronously and processed programmatically to provide real-time response via an ordered result set of candidate transactions that are ranked according to likelihood of representing an original transaction. A result set of candidate transactions is processed using a minimum set of tests, resulting in filtering out unlikely candidate records and/or weighting likely candidate records.

In one aspect, a computer-implemented method comprises, using a transaction processing server computer, receiving data identifying a particular transaction, in association with a request to find the original transaction relating to the particular transaction; the transaction processing server computer transmitting a search query to a database and receiving a result set comprising thousands to millions of candidate transactions; executing a plurality of transaction filter operations that implement base criteria for matching original transactions, to result in filtering the result set to exclude a plurality of the candidate transactions; executing a first plurality of different value matching operations and to weight matching transactions using strong weight values; executing a first pass of a second plurality of different value matching operations and weighting matching transactions using weak weight values, but excluding transactions in which a completion identifier value is set or in which a reversal identifier value is set; executing a second pass of the second plurality of different value matching operations and weighting matching transactions using weak weight values in which the completion identifier value and the reversal identifier value are ignored; forming a final result set of candidate transactions, ordering the final result set according to a magnitude of the match result values of the candidate transactions, and transmitting the final result set to another computer or programmatic process.

In one feature, the particular transaction and the original transaction comprising digitally stored electronic messages in ISO 8583 format. In another feature, executing a plurality of transaction filter operations that implement base criteria comprises excluding the particular transaction, excluding old transactions, and filtering out transactions with irrelevant ISO 8583 coding.

In a further feature, executing a plurality of transaction filter operations that implement base criteria comprises executing one or more filter operations to filter out, exclude or remove, from the result set, certain transactions based upon a transaction type value of the particular transaction of a form, given a transaction type X, an original transaction must have an internal transaction code like Y, comprising: given "Reversal," code shall be LIKE '1%,2%,4%'; given "Clearing," code shall be LIKE '1%,200%'; given "Auth advice" code shall be LIKE '1%,200%'; given "Incremental auth", code shall be LIKE '100%,200%'; given "Financial adjustment advice", code shall be LIKE '1%,2%'; given "Financial advice", code shall be LIKE '1%,200%'; given "Negative ack", code shall be LIKE '1%,2%'. "Code," in this context, may comprise a combination of various elements that are received in a transaction message, such as Message Type Indicator (three digits) + Processing Code (two digits) + Function Code (three digits, not always present) + Reason Code (four digits, not always present, internally defined rather than received). As an example, a filter operation expressed as <<Reversal code shall be like 1%,2%,4%>> is the equivalent of programmatically determining that a reversal is present when Message Type Indicator starts with a "1", Processing Code starts with a "2", and Function Code starts with a "4".

In another feature, the first plurality of different value matching operations comprising checking network reference ID, checking retrieval reference ID, checking authorization digest or hash value, and certain combinations of approval code, ISO 8583 STAN value, and local transaction date. In yet another feature, the first plurality of different value matching operations comprises strongly weighting one of the candidate transactions when a network reference ID value matches the particular transaction; strongly weighting one of the candidate transactions when a retrieval reference ID matches the particular transaction; and strongly weighting one of the candidate transactions when an authorization digest or hash value matches the particular transaction.

In still another feature, the method further comprises strongly weighting one of the candidate transactions when an approval code matches the particular transaction, an ISO 8583 STAN value matches the particular transaction, and a local transaction date matches the particular transaction to exact date and time. In a further feature, the method comprises weakly weighting one of the candidate transactions in response to any one or more of: a local transaction date matches to a value of date only, a merchant identification number of a card acceptor matches, and a transaction amount matches; the local transaction date matches to a value of date only, the merchant identification number of a card acceptor matches, and the transaction amount matches with a positive variance of up to 25% or a negative variance of up to 25%; the local transaction date matches to the value of date only within one day, the merchant identification number of a card acceptor matches, and transaction amount matches with a positive variance of up to 25% or a negative variance of up to 25%; the merchant identification number of a card acceptor specifies any of: service stations; automated fuel dispensers; automobile parking lots and garages; car washes; towing services; the transaction amount matches and the local transaction date matches to date only; the original STAN value matches, original acquiring institution identifier matches, and original forwarding institutional identifier matches; the STAN value matches and the retrieval reference number matches; the acquirer reference identifier matches, the approval number matches, and the transaction amount matches with a positive variance of up to 25% or a negative variance of up to 25%.

In another feature, executing the first pass of a second plurality of different value matching operations includes executing comparisons in the particular transaction and the candidate transactions of the result set of date values, merchant identifier values, transaction amount values, type of merchant values, and acquirer identifier values. The request may be one of thousands of other requests that the transaction processing server computer receives and processes concurrently in computer memory in real time.

### 2. STRUCTURAL OVERVIEW

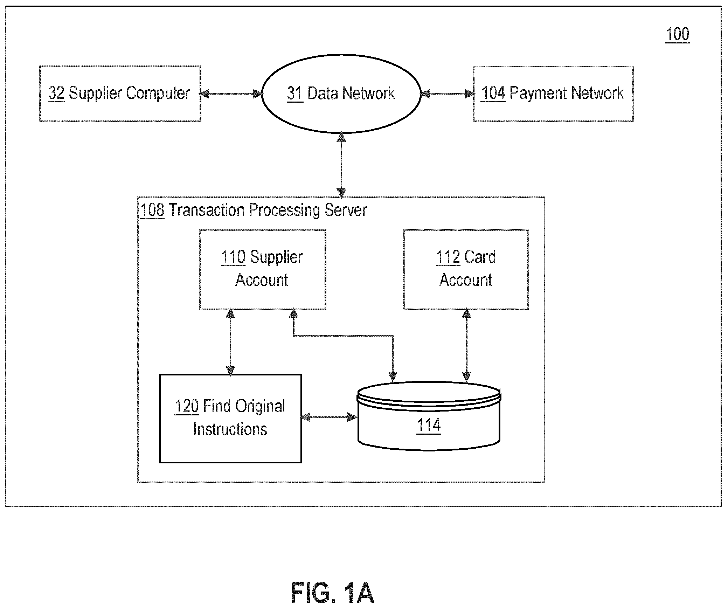

FIG. 1A illustrates a distributed computer system showing the context of use and principal functional elements with which one embodiment could be implemented.

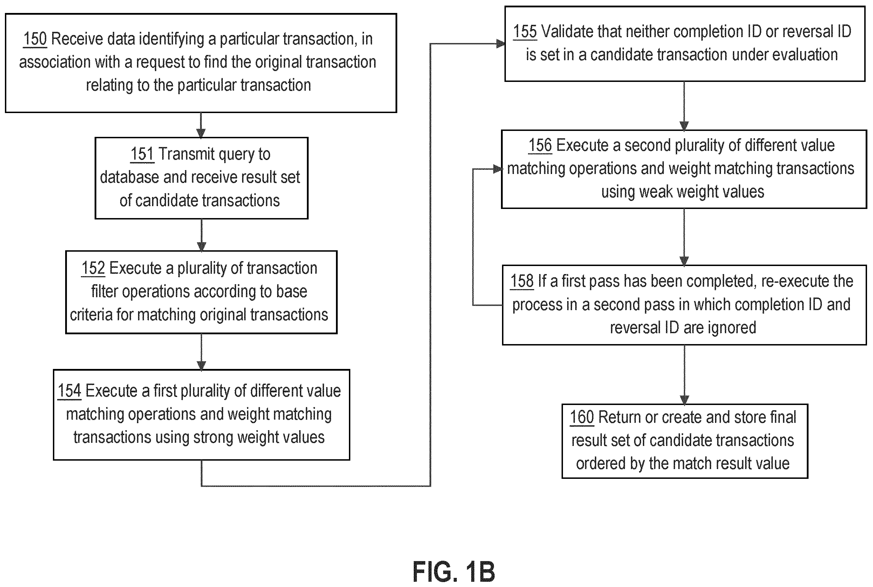

In an embodiment, a distributed computer system 100 comprises components that are implemented at least partially by hardware at one or more computing devices, such as one or more hardware processors executing stored program instructions stored in one or more memories for performing the functions that are described herein. In other words, all functions described herein are intended to indicate operations that are performed using programming in a special-purpose computer or general-purpose computer, in various embodiments. FIG. 1 illustrates only one of many possible arrangements of components configured to execute the programming described herein. Other arrangements may include fewer or different components, and the division of work between the components may vary depending on the arrangement.

FIG. 1, and the other drawing figures and all of the description and claims in this disclosure, are intended to present, disclose and claim a technical system and technical methods in which specially programmed computers, using a special-purpose distributed computer system design, execute functions that have not been available before to provide a practical application of computing technology to the problem of machine learning model development, validation, and deployment. In this manner, the disclosure presents a technical solution to a technical problem, and any interpretation of the disclosure or claims to cover any judicial exception to patent eligibility, such as an abstract idea, mental process, method of organizing human activity or mathematical algorithm, has no support in this disclosure and is erroneous.

In an embodiment, computer system 100 comprises a data network 31 that is communicatively coupled to a supplier computer 32, payment network 104, and transaction processing server 108. FIG. 1 illustrates one example context in which transaction processing may occur and the problem of matching a transaction message to an original transaction may arise. The same technical problem may arise in other contexts in which transactions, transaction data, and/or transaction messages are acquired through different calls, requests, or other data communications between the transaction processing server 108 and merchant computers, customer computers or other computers. For purposes of illustrating a clear example, FIG. 1 shows one instance of each of the foregoing functional units, but in other embodiments, one or more of the functional units may be implemented with two or more units.

Each of the supplier computer 32, payment network 104, and transaction processing server 108 may be implemented using one or more server-class computers, clusters, virtual machines, or other computing devices. For example, transaction processing server 108 may be implemented using a fault-tolerant, scalable set of virtual computing instances in a private datacenter, public datacenter or cloud computing facility with a number of central processing units sufficient to service thousands to millions of concurrent transaction requests from the payment network 104 and originating from thousands to millions of end user computers, supplier computers 102, or points of sale.

Supplier computer 32 may be owned or operated by, or associated with, a supplier of goods or services, such as a merchant, to an end user who is associated with end user computer 106. In some embodiments a call-out or other interoperation with the supplier computer 32 may not occur. Transactions with card details or other data also may originate from an end user computer, such as a mobile computing device, smartphone, laptop computer, desktop computer, or workstation that is associated with an individual end user and could be communicatively coupled to the supplier computer to interact with a merchant website or digital shopping card. In some embodiments, the end user computer may be programmed with an operating system having an internet software stack that can communicate with data network 31 using protocols such as HTTP over TCP/IP, and has an internet browser that can communicate with supplier computer 32 to transfer requests and responses using HTTP, application protocols implemented using apps on the end user computer, or other techniques. However, the use of an end-user computer is not required and embodiments may interoperate with supplier computers 32 that obtain card details or other transaction data from other sources such as at a point of sale terminal.

Data network 31 broadly represents one or more local area networks, wide area networks, internetworks, or a combination thereof, which are communicatively coupled via any of wired or wireless, terrestrial or satellite network links.

Payment network 104 is a secure, private network for communication of payment protocol messages between the computers of authorized parties such as banks, payment clearinghouses, merchants, card issuers, and card processors. Because payment network 104 comprises a plurality of computers, software, and specialized networking gear, the terms "payment network" and "payment network computer" may be used interchangeably for convenience to refer to all functional elements in a payment network.

Transaction processing server 108 may be one or more server computers and/or virtual machine instances that are programmed to implement the functions that are further described herein. In one embodiment, transaction processing server 108 is owned or operated by a card issuer-processor, but other entities also may implement functionally equivalent computers or programs. The transaction processing server 108 may be architected with load balancing routers, multiple processors, clusters, or virtual machine instances, work queues, multithreaded programming, and parallel processing to operate with real-time response to requests from payment network 104 as supplier computers 32 are conducting transactions at the scale of thousands to millions of requests per second.

In one embodiment, transaction processing server 108 comprises a digital storage device or database 114 that is programmed with a database schema or other form of organized, high-speed, digital storage. Database 114 stores transaction records of transactions as requests and responses flow through transaction processing server 108 and is architected with scalable storage to accommodate storage of millions of transaction records, with high-speed, real-time response to queries. In one embodiment, a separate database (not shown) may be used to store transaction records, and database 114 may obtain a subset of records periodically to support selected operations of the transaction processing server 108. Thus, a single, unified database or database server is not required and sets of records may be divided among distributed storage repositories to meet goals of scalability, response time, archiving and so forth. Database 114 also may manage a supplier account 110 and card account 112. Database 114 may represent any digital data storage device or repository including combinations of database clusters, relational databases, object storage or other repositories.

Supplier account 110 represents a digitally stored association of data that describes a supplier, such as the supplier associated with supplier computer 32. Supplier accounts 110 enable the system to differentially process stored program rules for different suppliers to implement different policy concerning approval of transactions, funding of transactions, use of cached balances, and/or denial of transactions. A supplier may supply goods, services, or a combination thereof to end users associated with an end user computer, a point of sale, or other entities or institution. A supplier may be a retailer, reseller, value-added reseller, distributor, or other entity in a supply chain or manufacturing chain. A supplier may deal in tangible goods and/or intangible goods, using physical retail, resale, or distribution facilities and/or virtual, online stores, shopping carts, catalogs, or other facilities.

Card account 112 represents a payment card that has been issued to a party such as an end user who is associated with an end user computer. Each card account 112 is associated with a digitally stored cached balance value, which represents an amount of value that is available for payment of purchases for which the card is presented.

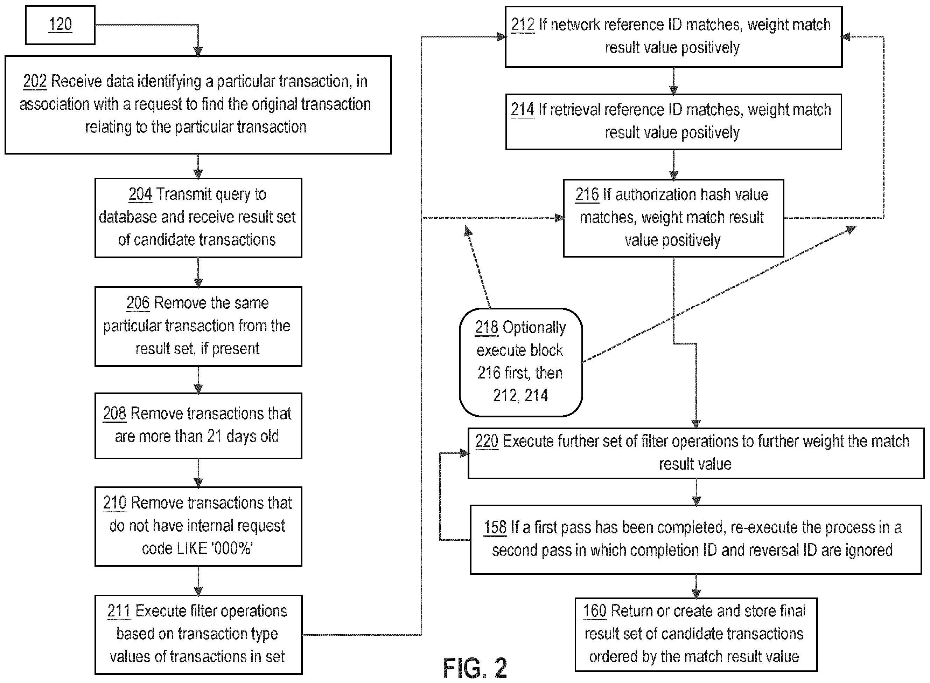

In one embodiment, transaction processing server 108 further comprises find original instructions 120, which are programmed to execute query, filtering, testing, and reporting operations as further described herein for FIG. 2.

For purposes of clarity, FIG. 1 illustrates one instance of the supplier account 110, card account 112, and find original instructions 120. In practical embodiments, transaction processing server 108 may be architected with sufficient CPU power, memory, and storage to process thousands of supplier accounts 110 as well as millions of card accounts 112 and associated data.

Computer system 100 is a high-speed, high-throughput, scalable system planned for real-time processing of card payment transactions as they occur. In this context, "real-time" response refers to receiving a request from payment network 104 to approve or decline a transaction, executing the find original instructions 120 at transaction processing server 108, transmitting messages to one or more of supplier computer 32 and payment network 104 to obtain decisions or data, and/or transmitting a response to the payment network within an amount of time that end users or suppliers will tolerate as reasonable to conduct a transaction. In some embodiments, the total time for executing the foregoing steps is from a fraction of a second to a maximum of three (3) seconds and in other embodiments it is up to seven (7) seconds.

In an embodiment, the transaction processing server 108 is programmed to respond to programmatic calls for managing transactions on various granularity levels, including retrieving individual transactions that occurred within a limited time range to obtaining large aggregated transaction datasets. In an embodiment, transaction processing server 108 is programmed to: retrieve a list of transactions associated with specific cards, campaigns, merchants, or account holders (users and businesses); retrieve information related to a specific transaction; retrieve the list of transactions related to a specific transaction; reverse an authorization for a specific transaction in a pending state.

The programming of a transaction processing server 108 in this manner may support several practical applications. For example, a financial mobile app may be programmed to enable users to view their transaction history in user profiles. A customer support interface may be programmed to review transactions and drill down to investigate what occurred with a given card. An accounting application may be programmed to troubleshoot discrepancies and perform internal reconciliation. These and other applications may issue database queries to retrieve a transaction based upon an identifier and receive a large result set of candidate transactions. From transactions in the result set, determining the original transaction is required.

Each transaction object that is digitally stored in the database 104 comprises a plurality of transaction attribute values. In one embodiment, the following attribute values are stored for each transaction object: identifier; internal reason code; internal transaction code; network reference ID; retrieval reference ID; authorization digest; approval code; local transaction date; transaction amount; acquirer reference identifier, approval number, and amount. Not all such attribute values may be required to successfully find an original transaction, as further described.

Other embodiments may store, and the techniques herein may use, fewer or more attribute values for a transaction object. For example, in one embodiment, database 114 is programmed with a table schema comprising a transaction table in which each row corresponds to a transaction object, and in each row, the attribute values of TABLE 1 are stored:

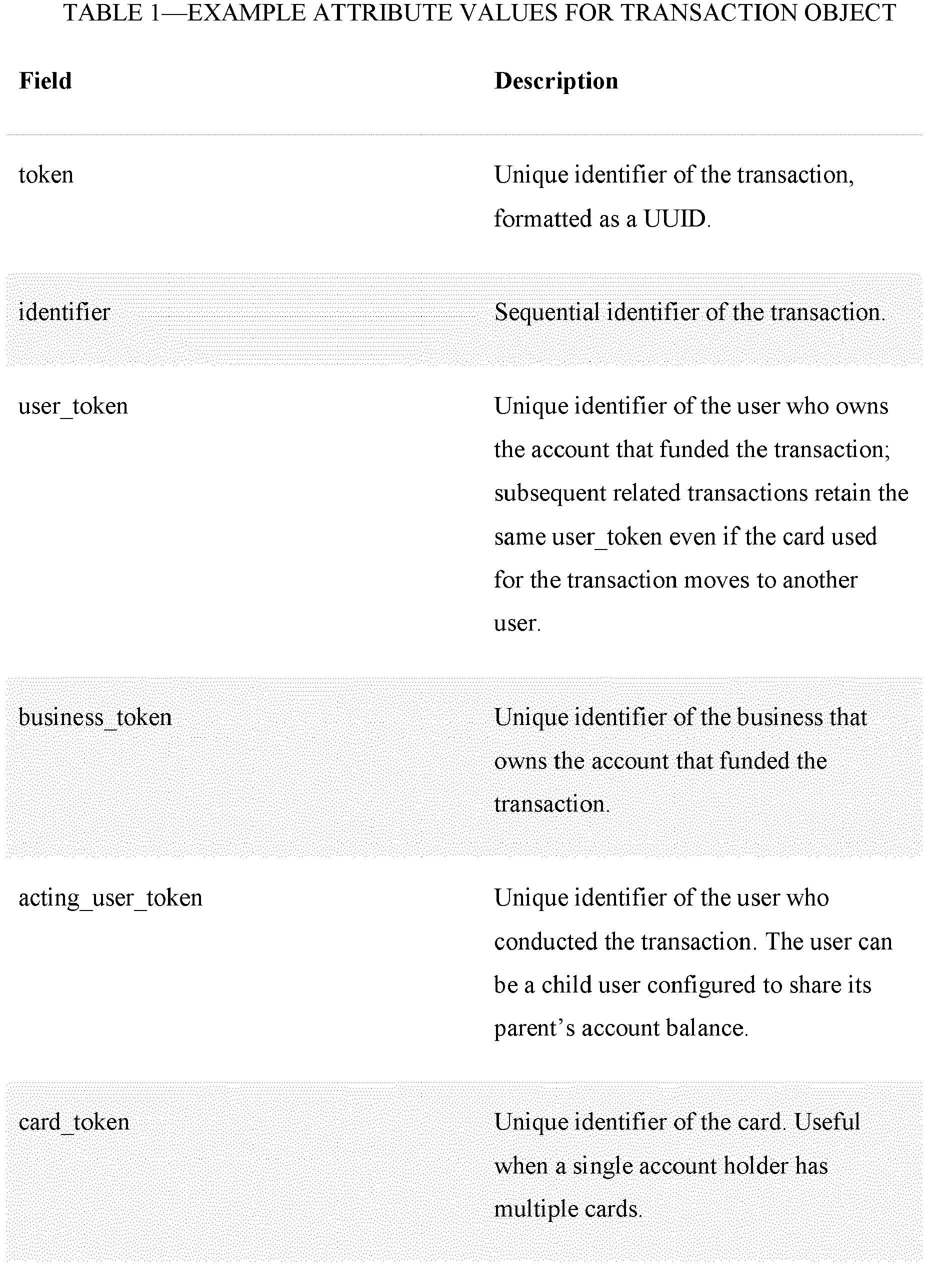

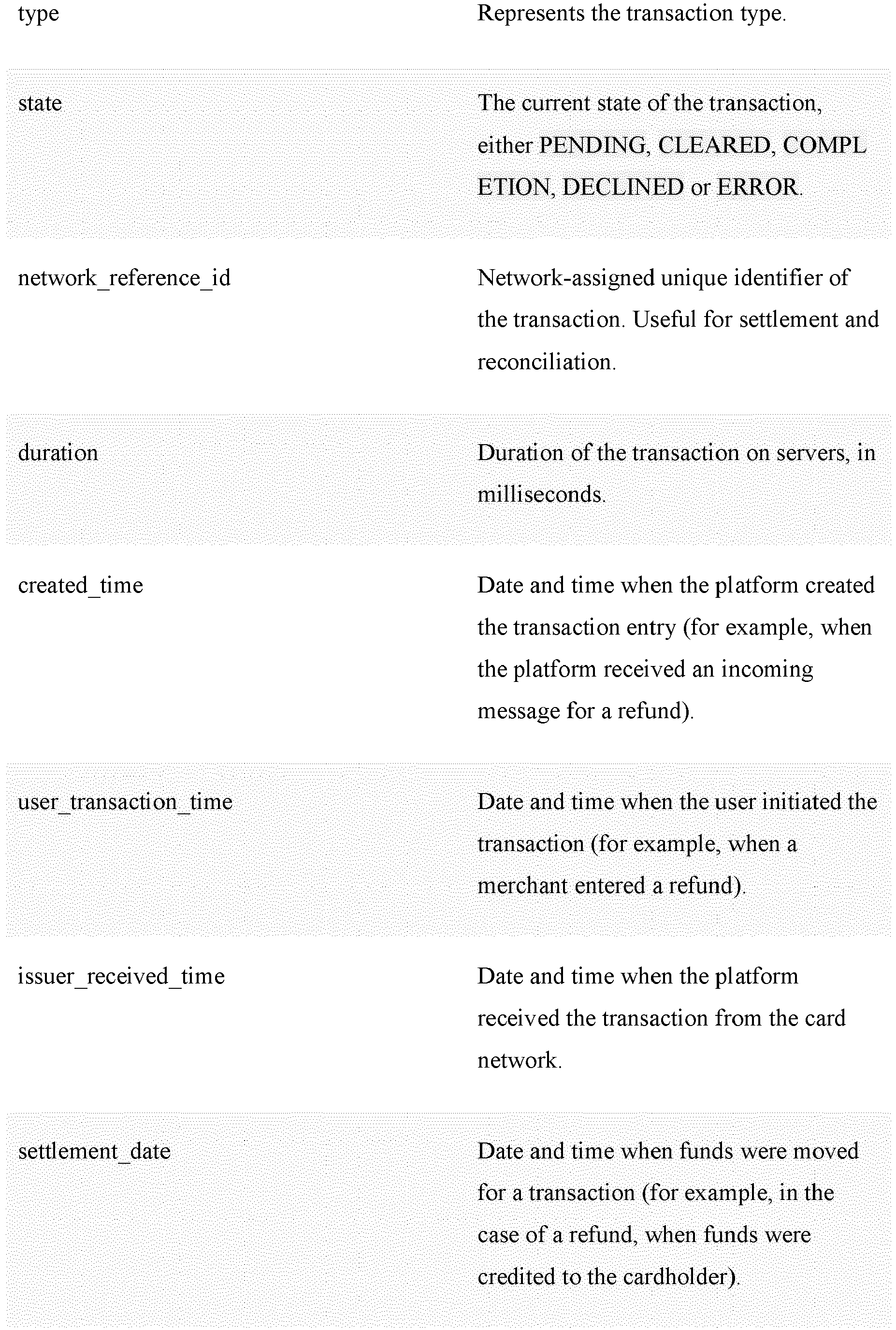

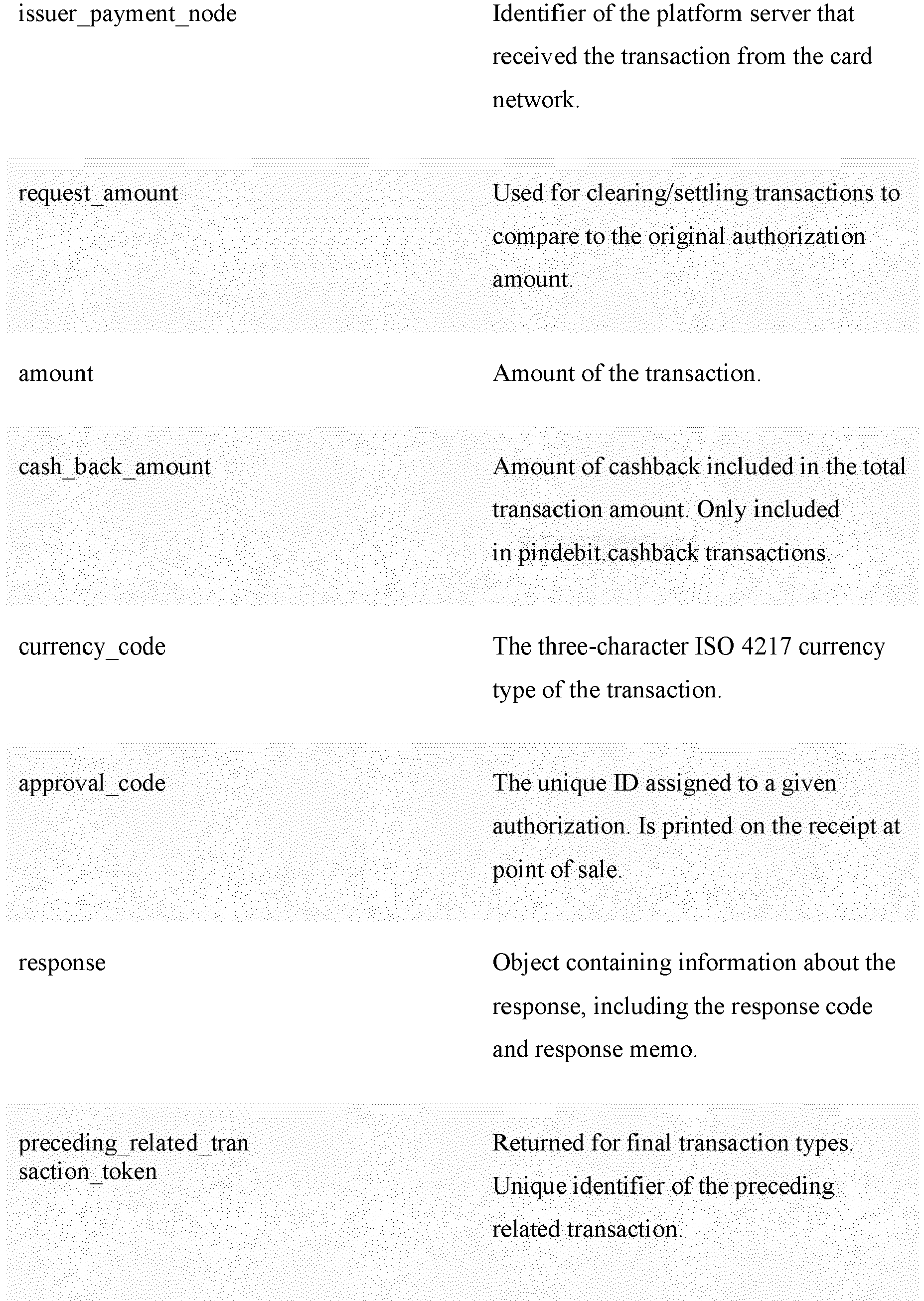

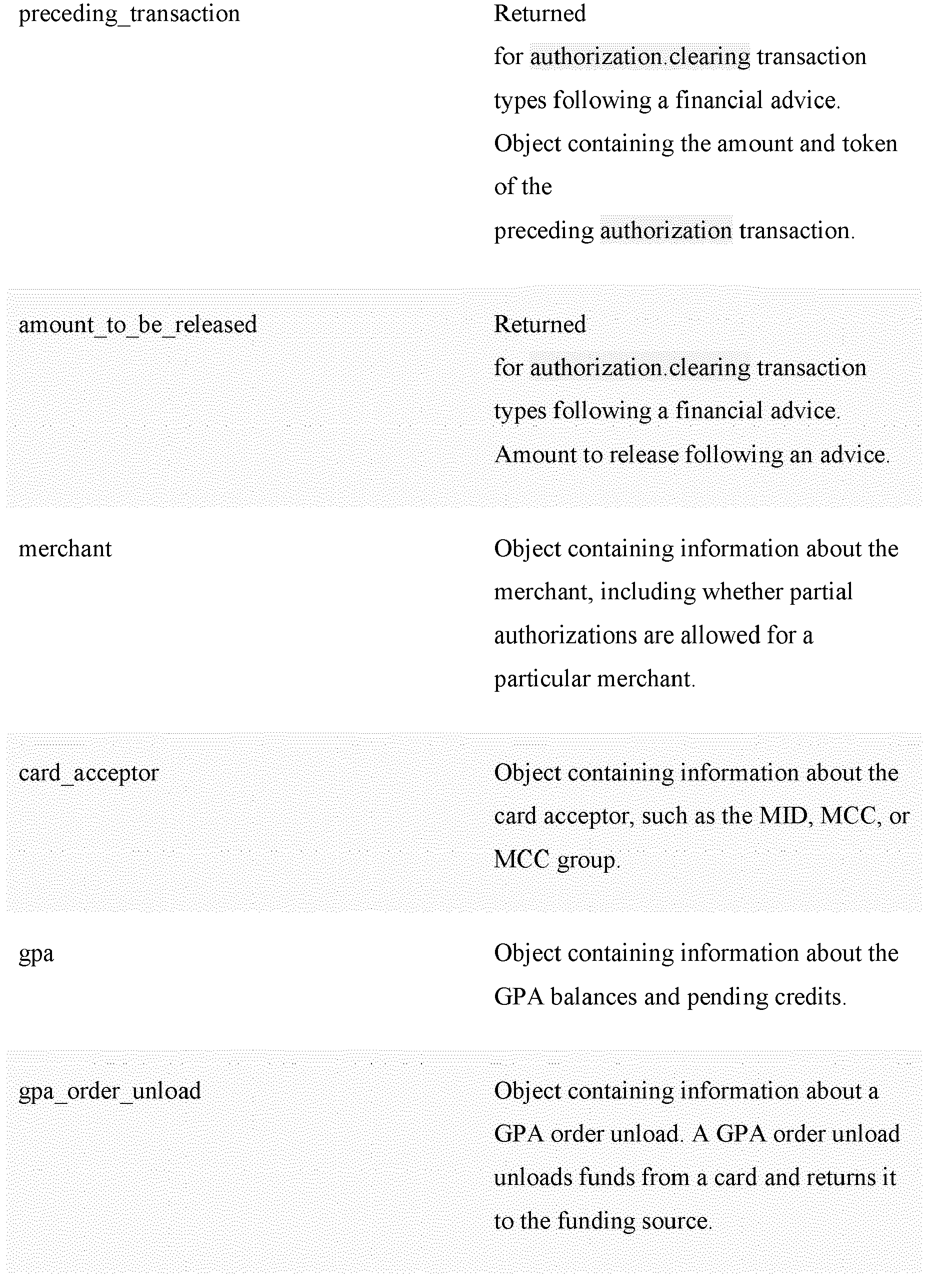

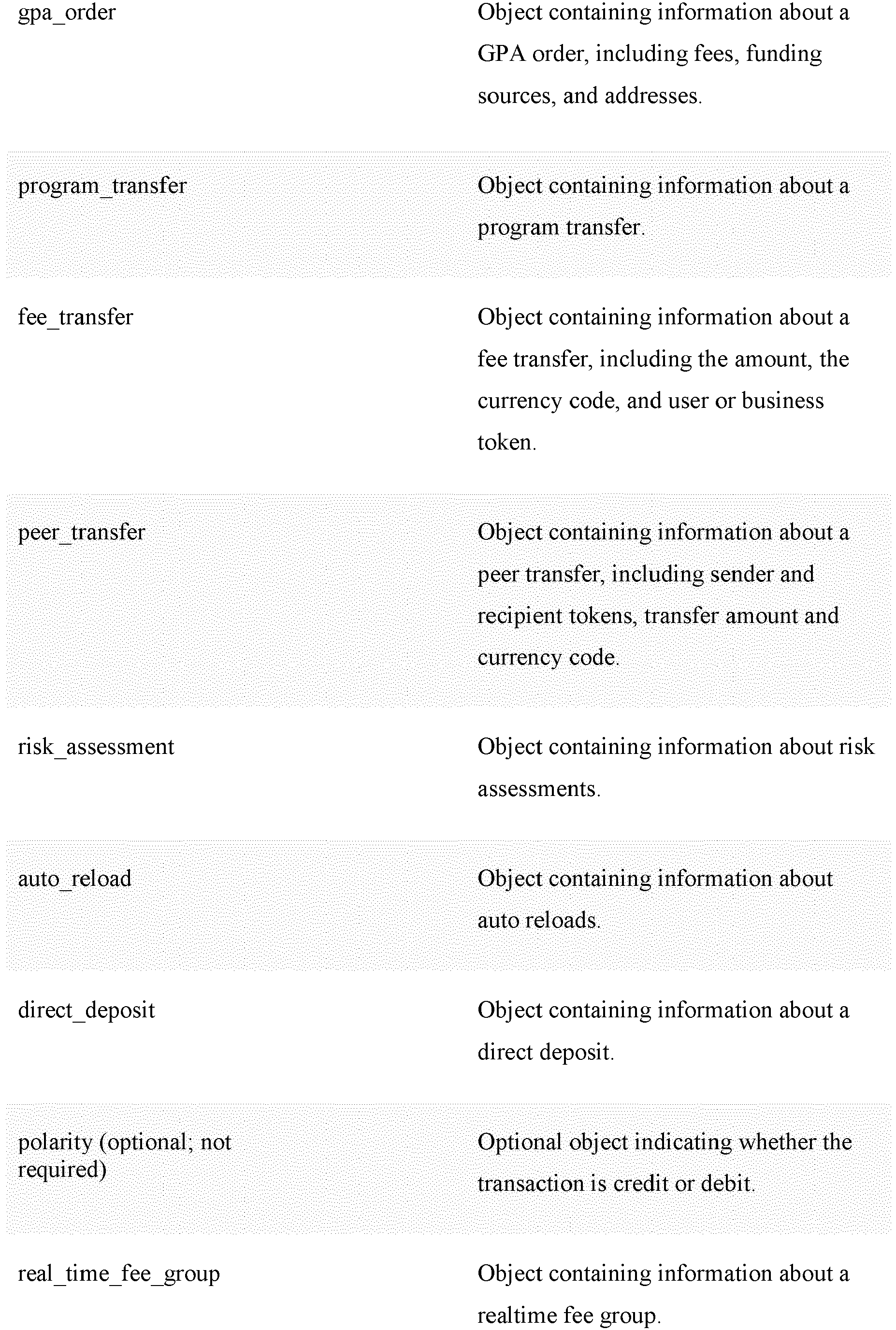

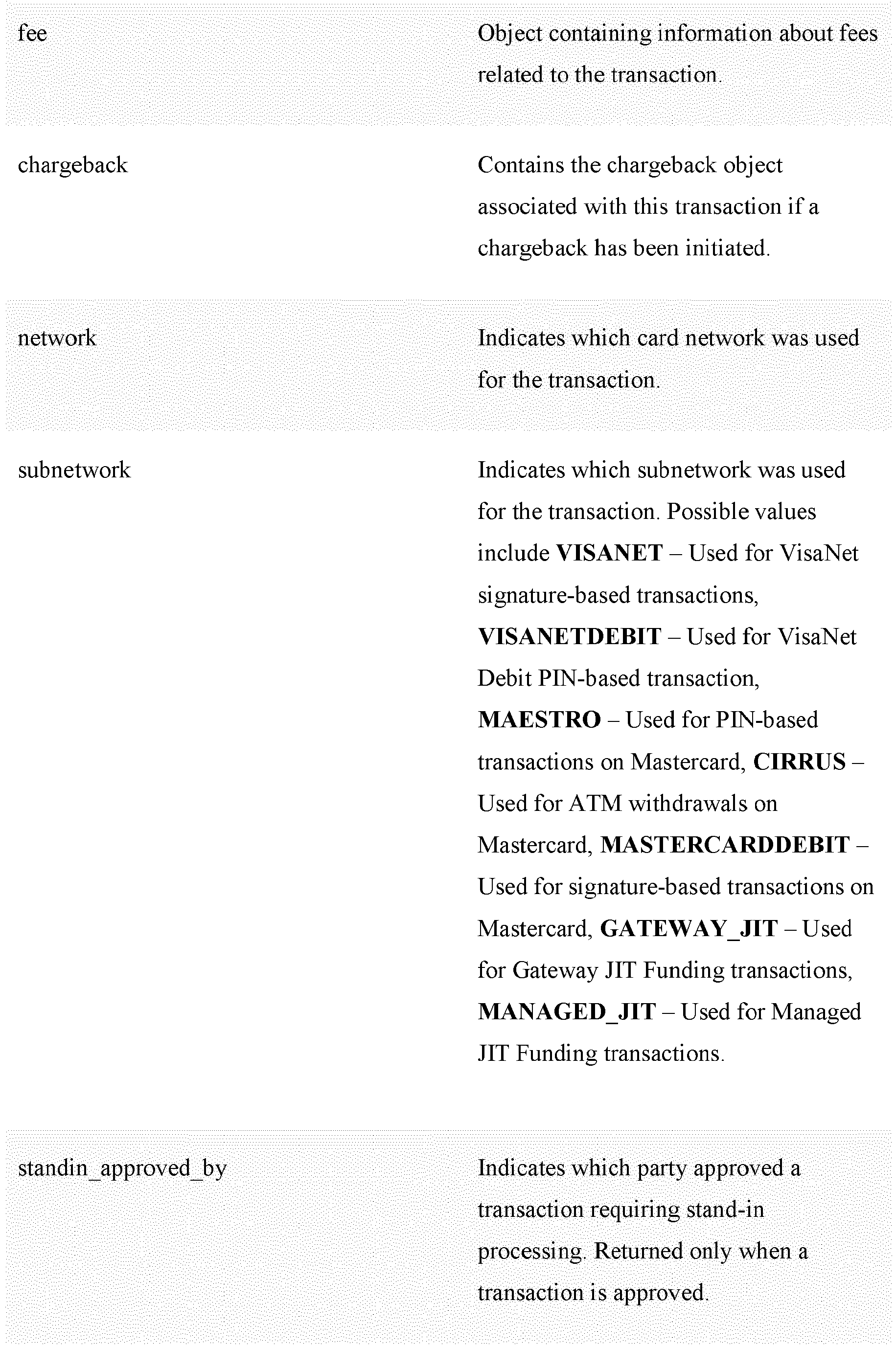

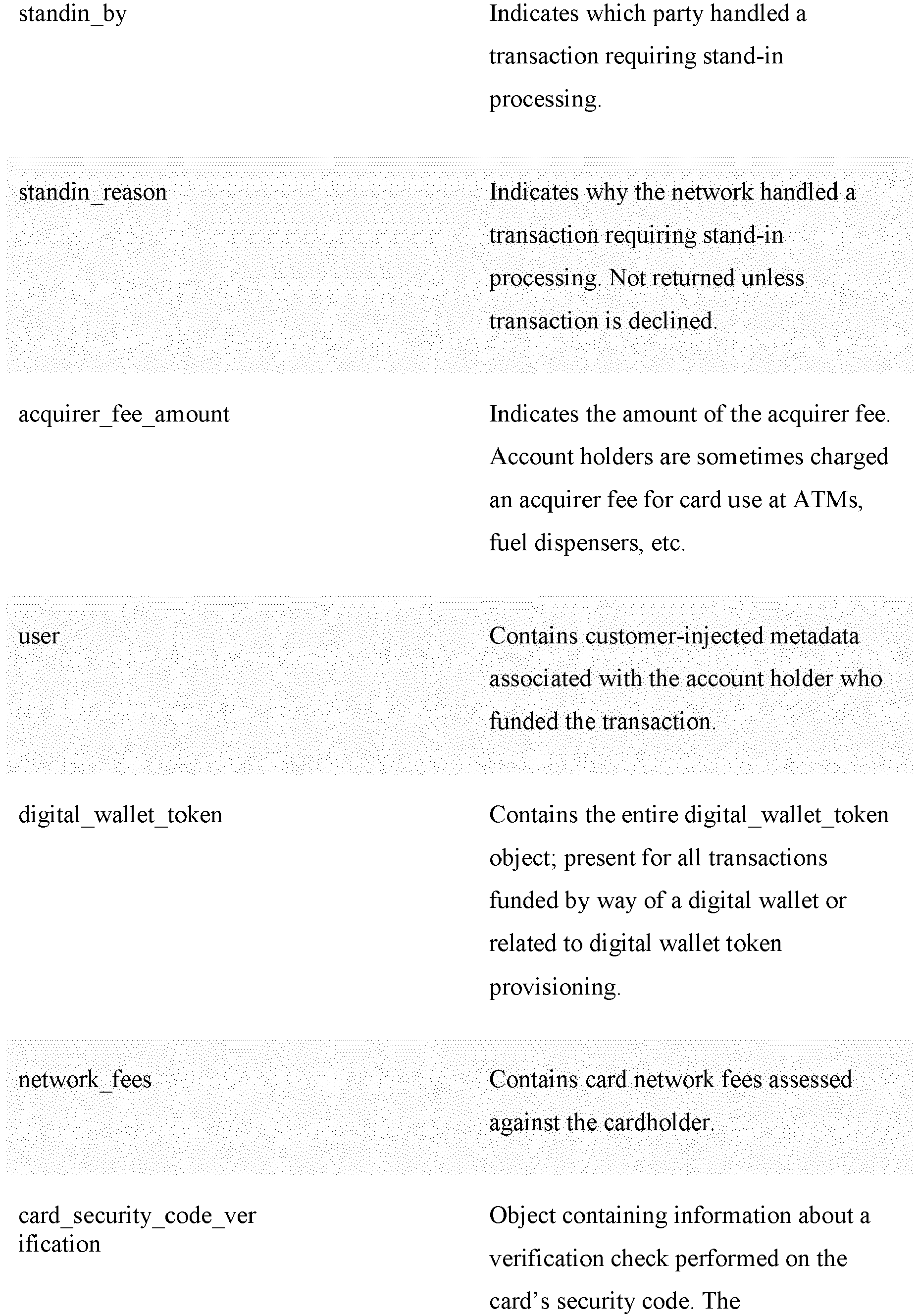

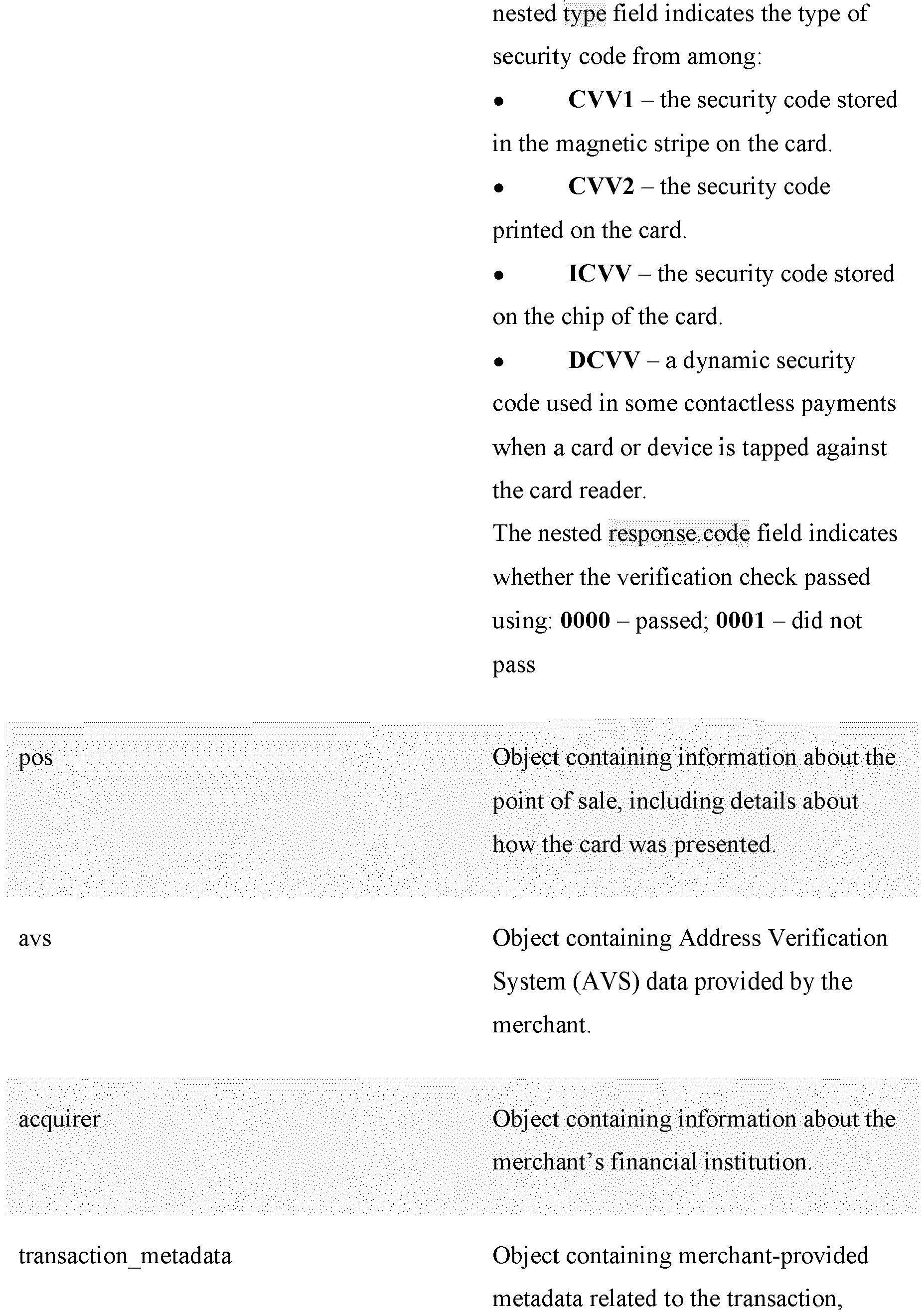

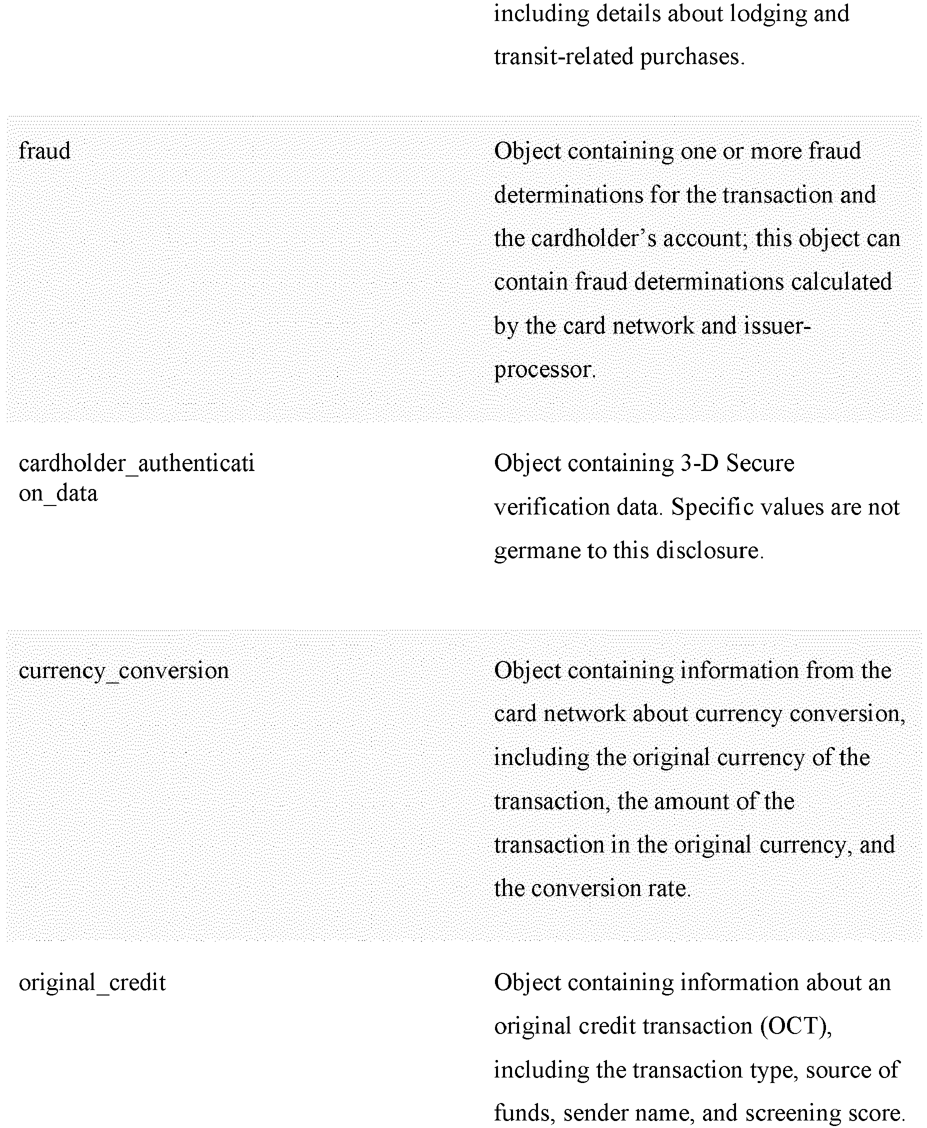

### 3. FUNCTIONAL OVERVIEW

FIG. 1B is a flow diagram of one embodiment of an algorithm that can be programmed to implement the disclosure. FIG. 2 is a flow diagram of another embodiment of an algorithm that can be programmed to implement the disclosure. In one embodiment, the find original instructions 120 of transaction processing server 108 are programmed to execute the functions illustrated in FIG. 1B, FIG. 2.

FIG. 1B, FIG. 2 and each other flow diagram herein is intended as an illustration at the functional level at which skilled persons, in the art to which this disclosure pertains, communicate with one another to describe and implement algorithms using programming. The flow diagrams are not intended to illustrate every instruction, method object or sub-step that would be needed to program every aspect of a working program, but are provided at the same functional level of illustration that is normally used at the high level of skill in this art to communicate the basis of developing working programs.

Referring first to FIG. 1B, at block 150, the process is programmed to receive data identifying a particular transaction, in association with a request to find the original transaction relating to the particular transaction. Block 150 represents a starting point at which the process has data available for a particular transaction, and then will execute steps seeking to find an original transaction relating to, concerning, or initiating a series of requests and responses that relate to the particular transaction. The data received at block 150 may include, in one embodiment, a record, data structure, or object comprising all the values set forth above in TABLE 1, or a subset of those values.

At block 151, the process is programmed to transmit a query to a database and receive a result set of transaction records termed candidate transactions or candidate transaction records. The query may return a fixed result set of records based on particular selection criteria, such as the token or identifier of TABLE 1. The result set then is processed in the steps further described herein to form a final result set of candidate transaction records that are most likely to include an original transaction for the particular transaction that was received at block 150.

At block 152, the process is programmed to execute a plurality of transaction filter operations that implement, or according to, base criteria for matching original transactions. The filter operations executed at block 152 cause removing, excluding, or filtering out transactions from the result set that fail to match or satisfy certain baseline criteria for a matching original transaction. Examples include excluding the particular transaction, excluding old transactions, filtering out transactions with irrelevant ISO 8583 coding.

Throughout this description, removing, excluding, or filtering out transactions may comprise modifying the result set to remove transaction records. Alternatively, the processes herein may be programmed to archive, copy, or otherwise store a second copy of the result set for reference in other steps, and to execute the removing, excluding, or filtering on a first copy of the result set. The specific mechanism is not critical provided that a reduced result set is created and managed, and the original result set, or all transactions, remains available for further assessment or use in other steps.

At block 154, the process is programmed to execute a first plurality of different value matching operations and to weight matching transactions using strong weight values. Block 154 includes executing several different comparisons of values in the particular transaction and the candidate transactions of the result set, for which the inventors have determined that the values are strong indicators that a transaction is the original. Examples include checking network reference ID, checking retrieval reference ID, checking authorization digest or hash value, and certain combinations of approval code, STAN value, and local transaction date. In processing ISO 8583 messages, a STAN value is usually generated by a network interface and is unique per online message request.

These operations may use weighted matching in which a match value is associated with each of the candidate records in the result set. The match value indicates a weight or level of confidence that the associated candidate record is the original transaction for the particular transaction of block 150. The match value may be weighted strongly or weakly depending on the outcome of execution of later operations. In this manner, a plurality of successive tests may contribute to raising the magnitude of a match value and therefore the rank of a transaction in the result set as potentially representing an original transaction. The magnitude of a strong weight or a weak weight may vary in different embodiments. For example, a weak weight could comprise incrementing the match value by "1" and a strong weight could comprise incrementing the match value by "10". The particular magnitude values are not critical if the overall effect of strongly weighting and weakly weighting results in differential ordering of transactions when all operations are complete.

At block 155, the process is programmed to validate that neither a completion identifier value or reversal identifier value is set in a candidate transaction under evaluation. These operations are based upon the inventors' recognition, in an inventive moment, that the presence of these values significantly reduces the likelihood that any candidate transaction is an original transaction because these values represent end stages of most transactions rather than original stages. Therefore, in one embodiment, block 155 is programmed to cause filtering out, from the result set, candidate transactions in which the completion identifier value or reversal identifier value is set.

At block 156, the process is programmed to execute a second plurality of different value matching operations and to weight matching transactions using weak weight values. Block 156 includes executing several different comparisons of values in the particular transaction and the candidate transactions of the result set, for which the inventors have determined that the values are weak indicators that a transaction is the original. Examples include various combinations of date, merchant identifier, transaction amount, type of merchant, and acquirer identifier.

At block 158, the process is programmed to test whether a first pass of the filter operations of block 156 has occurred. If so, then control transfers back to block 156 to repeat the filter operations of block 156 in a second pass in which the values of the completion identifier and reversal identifier are ignored. Thus, the second pass relaxes the constraints of block 155 and enables more transactions to receive weight values that may result in changing a final order of candidate transactions based on their weight values. If execution reaches block 158 a second time, then the test of block 158 will be negative and control transfers to block 160.

At block 160, the process is programmed to return a final result set to a calling program, process or system. Or, the final result set may be created and stored in a database table, other data storage or repository, memory, data structure, JSON blob, or response message. In an embodiment, the final result set of candidate transactions is ordered according to the magnitude of the match result values of the transactions. Therefore, transactions with the greatest likelihood of representing an original transaction are ordered first.

Different application programs, methods, or other programmatic processes may read or use transactions in the final result set in different ways. For example, a process that has requested or queried for a single original transaction corresponding to the particular transaction of block 202 may read or retrieve the first, highest-order transaction of the final result set and use that transaction in other processing or in a display or report to an end-user computing device. Another process may retrieve or read the top N transactions from the final result set and display or report all of them to an end-user device. This approach may be appropriate when the application is programmed to return a set of candidate transactions for further investigation or review as part of an approval chain or other process.

In some embodiments, the system may be programmed to generate a one-way hash over a combination of fields, to generate the hash value in the database at the time of authorization, and to match the stored hash value to a re-generated hash value over the same fields at clearing time. Example fields over which the hash may be generated include: approvalcode, transaction date, amount, cardholder. This approach can improve the overall security of the system by rendering it resistant to attacks that seek to modify data values or inject false messages.

Referring now to FIG. 2, in an embodiment, at block 202 a process is programmed to receive data identifying a particular transaction, in the same manner as described above for block 150. At block 204, as in block 151, the process is programmed to transmit a query to a database and receive a result set of transaction records termed candidate transactions. The query may be a streaming query that returns continuous transaction records. Or, the query may be a SQL or SQL-like query that returns a fixed result set of records based on particular selection criteria, such as the token or identifier of TABLE 1. In one embodiment, the result set that is received at block 204 is sorted by the identifier value in descending order, so that later operations potentially match the newest transaction records first.

At block 206, the process is programmed to remove the same particular transaction from the result set, if that particular transaction is present. Thus, with block 206, a matching original transaction cannot be the same as the particular transaction that was received at block 202.

At block 208, the process is programmed to remove transactions that are more than twenty-one days old from the result set of candidate transactions. In other embodiments, the value "21" in block 208 may be changed to a different value such as "10," "14,", "30," or others. The specific value is not critical but the inventors and applicant have found it useful to remove, filter or exclude candidate transactions that are old in comparison to the current date and time, or in comparison to the particular transaction that was received at block 202.

At block 210, the process is programmed to remove, from the result set, transactions that do not meet a baseline criterion. In one embodiment, the baseline criterion is an internal request code value matching the string "000" plus other values, as indicated by the filter code LIKE '000%'. The particular baseline criteria of block 210 is effective to filter out transaction records that are present in the database as specified kinds of responses or requests, for purposes of debugging, error checking or other reasons that exclude the possibility of being an original transaction.

The particular criterion or value that block 210 filters may vary in various embodiments; thus, the value "000" is not required and the specific wildcard syntax of LIKE ... % is not required. The code value that is tested or filtered in block 210, and other parts of FIG. 2 and sections of this description, may correspond to specified values as defined in ISO 8583, the international standard of the International Organization for Standardization for financial transaction card originated interchange messaging for systems that exchange electronic transactions initiated by cardholders using payment cards.

At block 211, the process is programmed to execute one or more filter operations to filter out, exclude or remove, from the result set, certain transactions based upon a transaction type value of the particular transaction that was received at block 202. In one embodiment, the filter operations are programmed as follows. Given a transaction type X, an original transaction must have an internal transaction code like Y, as detailed in one of the following programmatic tests and wildcarded filters:
a. Given "Reversal," code shall be LIKE '1%,2%,4%'
b. Given "Clearing," code shall be LIKE '1%,200%'
c. Given "Auth advice" code shall be LIKE '1%,200%'
d. Given "Incremental auth", code shall be LIKE '100%,200%'
e. Given "Financial adjustment advice", code shall be LIKE '1%,2%'
f. Given "Financial advice", code shall be LIKE ' 1%,200%'
g. Given "Negative ack", code shall be LIKE '1%,2%'

For each of the foregoing, "code" may involve a combination of various elements that are received in a transaction message, such as Message Type Indicator (three digits) + Processing Code (two digits) + Function Code (three digits, not always present) + Reason Code (four digits, not always present, internally defined rather than received). As an example, a filter operation expressed as <<Reversal code shall be like 1%,2%,4%>> is the equivalent of programmatically determining that a reversal is present when Message Type Indicator starts with a "1", Processing Code starts with a "2", and Function Code starts with a "4".

In one embodiment, block 212, block 214, block 216 are executed next, in that order. At block 212, the process is programmed to test whether a network reference identifier (ID) value matches in the particular transaction and one or more of the transactions in the result set. If a match is found, then a match result value associated with the one or more transactions is weighted strongly. At block 214, the process is programmed to test whether a retrieval reference identifier (ID) value matches in the particular transaction and one or more of the transactions in the result set. If a match is found, then the match result value associated with the one or more transactions is weighted strongly.

At block 216, the process is programmed to test whether an authorization digest or hash matches in the particular transaction and one or more of the transactions in the result set. If a match is found, then a match result value associated with the one or more transactions is weighted strongly. In one embodiment, the authorization digest of a transaction is created during an authorization operation and comprises a one-way hash over the values: transaction approval code, authorization amount, transaction date, acting cardholder.

As shown in block 218, in another embodiment, the order of execution may be changed to block 216 followed by block 212, 214. For example, the order of execution may be controlled by one or more flag values. In one approach, a single flag value selects the order of execution. In another approach, a variance value is calculated as a percentage difference in the comparative authorization hash values that were assessed at block 216; if the difference is greater than zero, then the order of operations is changed. The second approach may be used alone, or only when the flag value of the first approach is set or TRUE.

At block 220, the process is programmed to execute a further set of filter operations to further weight the match result value for one or more transactions. In one embodiment, the following prioritized sequence of ten criteria are evaluated for each candidate transaction.
1. If the approval code matches, STAN value matches, and local transaction date matches to the exact date and time, in a candidate transaction in the result set and the particular transaction, then the match result value is weighted strongly.
2. If the approval code matches and the STAN value matches, then the match result value is weighted strongly.
3. If the local transaction date matches to the value of date only, the MID value matches, and transaction amount matches, then the match result value is weighted weakly. In this context, MID value refers to a merchant identification number of a card acceptor.
4. If the local transaction date matches to the value of date only, the MID value matches, and transaction amount matches with a positive variance of up to 25% or a negative variance of up to 25%, then the match result value is weighted weakly.
5. If the local transaction date matches to the value of date only within one day, the MID value matches, and transaction amount matches with a positive variance of up to 25% or a negative variance of up to 25%, then the match result value is weighted weakly.
6. If the MCC is included among the values {5541,5542,7523,7542,7549}, and the local transaction date value matches to date only, then the match result value is weighted weakly. In this context, MCC is an ISO 8583 merchant category code, and the values {5541,5542,7523,7542,7549} respectively correspond to the merchant categories of: service stations; automated fuel dispensers; automobile parking lots and garages; car washes; towing services.
7. If the transaction amount matches and the local transaction date matches to date only, then the match result value is weighted weakly.
8. If a match is found for the original STAN value, original acquiring institution identifier, and original forwarding institutional identifier, then the match result value is weighted weakly.
9. If matches are found for the STAN value and RRN value, then the match result value is weighted weakly. In this context, RRN is a retrieval reference number under ISO 8583.
10. If a match is found for the acquirer reference identifier, approval number, and the transaction amount matches with a positive variance of up to 25% or a negative variance of up to 25%, then the match result value is weighted weakly.

Thereafter, block 158, 160 execute in the same manner as described herein for FIG. 1B, except that the second pass resumes execution at block 220 rather than block 156.

The description thus far has disclosed an efficient, accurate computer-executable process of filtering thousands to millions of digitally stored transaction records, each having numerous attribute values, to identify an original transaction or request relating to a particular transaction or request having an arbitrary relationship in time to the original transaction. The particular transaction may be received asynchronously and processed programmatically to provide real-time response via an ordered result set of candidate transactions that are ranked according to likelihood of representing an original transaction. A result set of candidate transactions is processed using a minimum set of tests, resulting in filtering out unlikely candidate records and/or weighting likely candidate records.

The inventors have discovered, in an inventive moment, specific means of testing, filtering, and excluding transactions or records based on those criteria that are most predictive of the original transaction. Consequently, the inventors have arrived at, through inventive work, an efficient processing method that reduces the use of processor resources, memory, storage, and network bandwidth to search for, identify, and return the original transaction or likely candidates for the original transaction. The combination of techniques devised by the inventors to process transactions in this manner permit a transaction processing system to provide real-time response while processing a high volume of online transactions on a continuous basis.

### 4. IMPLEMENTATION EXAMPLE - HARDWARE OVERVIEW

According to one embodiment, the techniques described herein are implemented by at least one computing device. The techniques may be implemented in whole or in part using a combination of at least one server computer and/or other computing devices that are coupled using a network, such as a packet data network. The computing devices may be hard-wired to perform the techniques, or may include digital electronic devices such as at least one application-specific integrated circuit (ASIC) or field programmable gate array (FPGA) that is persistently programmed to perform the techniques, or may include at least one general purpose hardware processor programmed to perform the techniques pursuant to program instructions in firmware, memory, other storage, or a combination. Such computing devices may also combine custom hard-wired logic, ASICs, or FPGAs with custom programming to accomplish the described techniques.

The computing devices may be server computers, workstations, personal computers, portable computer systems, handheld devices, mobile computing devices, wearable devices, body mounted or implantable devices, smartphones, smart appliances, internetworking devices, autonomous or semi-autonomous devices such as robots or unmanned ground or aerial vehicles, any other electronic device that incorporates hard-wired and/or program logic to implement the described techniques, one or more virtual computing machines or instances in a data center, and/or a network of server computers and/or personal computers.

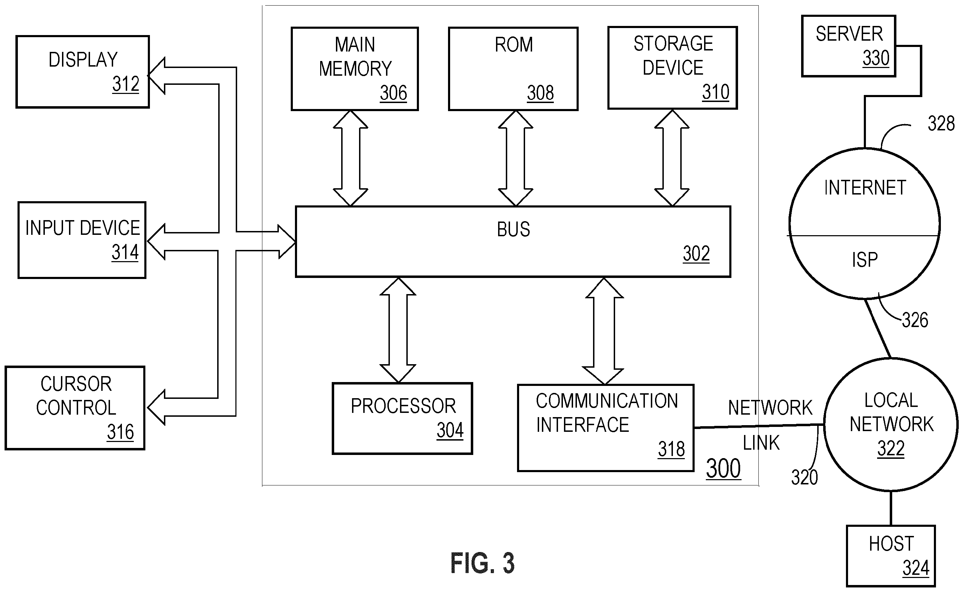

FIG. 3 is a block diagram that illustrates an example computer system with which an embodiment may be implemented. In the example of FIG. 3, a computer system 300 and instructions for implementing the disclosed technologies in hardware, software, or a combination of hardware and software, are represented schematically, for example as boxes and circles, at the same level of detail that is commonly used by persons of ordinary skill in the art to which this disclosure pertains for communicating about computer architecture and computer systems implementations.

Computer system 300 includes an input/output (I/O) subsystem 302 which may include a bus and/or other communication mechanism(s) for communicating information and/or instructions between the components of the computer system 300 over electronic signal paths. The I/O subsystem 302 may include an I/O controller, a memory controller and at least one I/O port. The electronic signal paths are represented schematically in the drawings, for example as lines, unidirectional arrows, or bidirectional arrows.

At least one hardware processor 304 is coupled to I/O subsystem 302 for processing information and instructions. Hardware processor 304 may include, for example, a general-purpose microprocessor or microcontroller and/or a special-purpose microprocessor such as an embedded system or a graphics processing unit (GPU) or a digital signal processor or ARM processor. Processor 304 may comprise an integrated arithmetic logic unit (ALU) or may be coupled to a separate ALU.

Computer system 300 includes one or more units of memory 306, such as a main memory, which is coupled to I/O subsystem 302 for electronically digitally storing data and instructions to be executed by processor 304. Memory 306 may include volatile memory such as various forms of random-access memory (RAM) or other dynamic storage device. Memory 306 also may be used for storing temporary variables or other intermediate information during execution of instructions to be executed by processor 304. Such instructions, when stored in non-transitory computer-readable storage media accessible to processor 304, can render computer system 300 into a special-purpose machine that is customized to perform the operations specified in the instructions.

Computer system 300 further includes non-volatile memory such as read only memory (ROM) 308 or other static storage device coupled to I/O subsystem 302 for storing information and instructions for processor 304. The ROM 308 may include various forms of programmable ROM (PROM) such as erasable PROM (EPROM) or electrically erasable PROM (EEPROM). A unit of persistent storage 310 may include various forms of non-volatile RAM (NVRAM), such as FLASH memory, or solid-state storage, magnetic disk or optical disk such as CD-ROM or DVD-ROM and may be coupled to I/O subsystem 302 for storing information and instructions. Storage 310 is an example of a non-transitory computer-readable medium that may be used to store instructions and data which when executed by the processor 304 cause performing computer-implemented methods to execute the techniques herein.

The instructions in memory 306, ROM 308 or storage 310 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement TCP/IP, HTTP or other communication protocols; file format processing instructions to parse or render files coded using HTML, XML, JPEG, MPEG or PNG; user interface instructions to render or interpret commands for a graphical user interface (GUI), command-line interface or text user interface; application software such as an office suite, internet access applications, design and manufacturing applications, graphics applications, audio applications, software engineering applications, educational applications, games or miscellaneous applications. The instructions may implement a web server, web application server or web client. The instructions may be organized as a presentation layer, application layer and data storage layer such as a relational database system using structured query language (SQL) or no SQL, an object store, a graph database, a flat file system or other data storage.

Computer system 300 may be coupled via I/O subsystem 302 to at least one output device 312. In one embodiment, output device 312 is a digital computer display. Examples of a display that may be used in various embodiments include a touch screen display or a light-emitting diode (LED) display or a liquid crystal display (LCD) or an e-paper display. Computer system 300 may include other type(s) of output devices 312, alternatively or in addition to a display device. Examples of other output devices 312 include printers, ticket printers, plotters, projectors, sound cards or video cards, speakers, buzzers or piezoelectric devices or other audible devices, lamps or LED or LCD indicators, haptic devices, actuators or servos.

At least one input device 314 is coupled to I/O subsystem 302 for communicating signals, data, command selections or gestures to processor 304. Examples of input devices 314 include touch screens, microphones, still and video digital cameras, alphanumeric and other keys, keypads, keyboards, graphics tablets, image scanners, joysticks, clocks, switches, buttons, dials, slides, and/or various types of sensors such as force sensors, motion sensors, heat sensors, accelerometers, gyroscopes, and inertial measurement unit (IMU) sensors and/or various types of transceivers such as wireless, such as cellular or Wi-Fi, radio frequency (RF) or infrared (IR) transceivers and Global Positioning System (GPS) transceivers.

Another type of input device is a control device 316, which may perform cursor control or other automated control functions such as navigation in a graphical interface on a display screen, alternatively or in addition to input functions. Control device 316 may be a touchpad, a mouse, a trackball, or cursor direction keys for communicating direction information and command selections to processor 304 and for controlling cursor movement on display 312. The input device may have at least two degrees of freedom in two axes, a first axis (e.g., x) and a second axis (e.g., y), that allows the device to specify positions in a plane. Another type of input device is a wired, wireless, or optical control device such as a joystick, wand, console, steering wheel, pedal, gearshift mechanism or other type of control device. An input device 314 may include a combination of multiple different input devices, such as a video camera and a depth sensor.

In another embodiment, computer system 300 may comprise an internet of things (IoT) device in which one or more of the output device 312, input device 314, and control device 316 are omitted. Or, in such an embodiment, the input device 314 may comprise one or more cameras, motion detectors, thermometers, microphones, seismic detectors, other sensors or detectors, measurement devices or encoders and the output device 312 may comprise a special-purpose display such as a single-line LED or LCD display, one or more indicators, a display panel, a meter, a valve, a solenoid, an actuator or a servo.

When computer system 300 is a mobile computing device, input device 314 may comprise a global positioning system (GPS) receiver coupled to a GPS module that is capable of triangulating to a plurality of GPS satellites, determining and generating geo-location or position data such as latitude-longitude values for a geophysical location of the computer system 300. Output device 312 may include hardware, software, firmware and interfaces for generating position reporting packets, notifications, pulse or heartbeat signals, or other recurring data transmissions that specify a position of the computer system 300, alone or in combination with other application-specific data, directed toward host 324 or server 330.

Computer system 300 may implement the techniques described herein using customized hard-wired logic, at least one ASIC or FPGA, firmware and/or program instructions or logic which when loaded and used or executed in combination with the computer system causes or programs the computer system to operate as a special-purpose machine. According to one embodiment, the techniques herein are performed by computer system 300 in response to processor 304 executing at least one sequence of at least one instruction contained in main memory 306. Such instructions may be read into main memory 306 from another storage medium, such as storage 310. Execution of the sequences of instructions contained in main memory 306 causes processor 304 to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage 310. Volatile media includes dynamic memory, such as memory 306. Common forms of storage media include, for example, a hard disk, solid state drive, flash drive, magnetic data storage medium, any optical or physical data storage medium, memory chip, or the like.

Storage media is distinct from but may be used in conjunction with transmission media. Transmission media participates in transferring information between storage media. For example, transmission media includes coaxial cables, copper wire and fiber optics, including the wires that comprise a bus of I/O subsystem 302. Transmission media can also take the form of acoustic or light waves, such as those generated during radio-wave and infrared data communications.

Various forms of media may be involved in carrying at least one sequence of at least one instruction to processor 304 for execution. For example, the instructions may initially be carried on a magnetic disk or solid-state drive of a remote computer. The remote computer can load the instructions into its dynamic memory and send the instructions over a communication link such as a fiber optic or coaxial cable or telephone line using a modem. A modem or router local to computer system 300 can receive the data on the communication link and convert the data to a format that can be read by computer system 300. For instance, a receiver such as a radio frequency antenna or an infrared detector can receive the data carried in a wireless or optical signal and appropriate circuitry can provide the data to I/O subsystem 302 such as place the data on a bus. I/O subsystem 302 carries the data to memory 306, from which processor 304 retrieves and executes the instructions. The instructions received by memory 306 may optionally be stored on storage 310 either before or after execution by processor 304.

Computer system 300 also includes a communication interface 318 coupled to bus 302. Communication interface 318 provides a two-way data communication coupling to network link(s) 320 that are directly or indirectly connected to at least one communication networks, such as a network 322 or a public or private cloud on the Internet. For example, communication interface 318 may be an Ethernet networking interface, integrated-services digital network (ISDN) card, cable modem, satellite modem, or a modem to provide a data communication connection to a corresponding type of communications line, for example an Ethernet cable or a metal cable of any kind or a fiber-optic line or a telephone line. Network 322 broadly represents a local area network (LAN), wide-area network (WAN), campus network, internetwork or any combination thereof. Communication interface 318 may comprise a LAN card to provide a data communication connection to a compatible LAN, or a cellular radiotelephone interface that is wired to send or receive cellular data according to cellular radiotelephone wireless networking standards, or a satellite radio interface that is wired to send or receive digital data according to satellite wireless networking standards. In any such implementation, communication interface 318 sends and receives electrical, electromagnetic or optical signals over signal paths that carry digital data streams representing various types of information.

Network link 320 typically provides electrical, electromagnetic, or optical data communication directly or through at least one network to other data devices, using, for example, satellite, cellular, Wi-Fi, or BLUETOOTH technology. For example, network link 320 may provide a connection through a network 322 to a host computer 324.

Furthermore, network link 320 may provide a connection through network 322 or to other computing devices via internetworking devices and/or computers that are operated by an Internet Service Provider (ISP) 326. ISP 326 provides data communication services through a world-wide packet data communication network represented as internet 328. A server computer 330 may be coupled to internet 328. Server 330 broadly represents any computer, data center, virtual machine or virtual computing instance with or without a hypervisor, or computer executing a containerized program system such as DOCKER or KUBERNETES. Server 330 may represent an electronic digital service that is implemented using more than one computer or instance and that is accessed and used by transmitting web services requests, uniform resource locator (URL) strings with parameters in HTTP payloads, API calls, app services calls, or other service calls. Computer system 300 and server 330 may form elements of a distributed computing system that includes other computers, a processing cluster, server farm or other organization of computers that cooperate to perform tasks or execute applications or services. Server 330 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement TCP/IP, HTTP or other communication protocols; file format processing instructions to parse or render files coded using HTML, XML, JPEG, MPEG or PNG; user interface instructions to render or interpret commands for a graphical user interface (GUI), command-line interface or text user interface; application software such as an office suite, internet access applications, design and manufacturing applications, graphics applications, audio applications, software engineering applications, educational applications, games or miscellaneous applications. Server 330 may comprise a web application server that hosts a presentation layer, application layer and data storage layer such as a relational database system using structured query language (SQL) or no SQL, an object store, a graph database, a flat file system or other data storage.

Computer system 300 can send messages and receive data and instructions, including program code, through the network(s), network link 320 and communication interface 318. In the Internet example, a server 330 might transmit a requested code for an application program through Internet 328, ISP 326, local network 322 and communication interface 318. The received code may be executed by processor 304 as it is received, and/or stored in storage 310, or other non-volatile storage for later execution.

The execution of instructions as described in this section may implement a process in the form of an instance of a computer program that is being executed and consisting of program code and its current activity. Depending on the operating system (OS), a process may be made up of multiple threads of execution that execute instructions concurrently. In this context, a computer program is a passive collection of instructions, while a process may be the actual execution of those instructions. Several processes may be associated with the same program; for example, opening up several instances of the same program often means more than one process is being executed. Multitasking may be implemented to allow multiple processes to share processor 304. While each processor 304 or core of the processor executes a single task at a time, computer system 300 may be programmed to implement multitasking to allow each processor to switch between tasks that are being executed without having to wait for each task to finish. In an embodiment, switches may be performed when tasks perform input/output operations, when a task indicates that it can be switched, or on hardware interrupts. Time-sharing may be implemented to allow fast response for interactive user applications by rapidly performing context switches to provide the appearance of concurrent execution of multiple processes simultaneously. In an embodiment, for security and reliability, an operating system may prevent direct communication between independent processes, providing strictly mediated and controlled inter-process communication functionality.

In the foregoing specification, embodiments of the invention have been described with reference to numerous specific details that may vary from implementation to implementation. The specification and drawings are, accordingly, to be regarded in an illustrative rather than a restrictive sense. The sole and exclusive indicator of the scope of the invention, and what is intended by the applicants to be the scope of the invention, is the scope of the set of claims that issue from this application, in the specific form in which such claims issue, including any subsequent correction.

## Claims

1. A computer-implemented method, comprising:
using a transaction processing server computer, receiving data identifying a particular transaction, in association with a request to find the original transaction relating to the particular transaction;
the transaction processing server computer transmitting a search query to a database and receiving a result set comprising thousands to millions of candidate transactions;
executing a plurality of transaction filter operations that implement base criteria for matching original transactions, to result in filtering the result set to exclude a plurality of the candidate transactions;
executing a first plurality of different value matching operations and to weight matching transactions using strong weight values;
executing a first pass of a second plurality of different value matching operations and weighting matching transactions using weak weight values, but excluding transactions in which a completion identifier value is set or in which a reversal identifier value is set;
executing a second pass of the second plurality of different value matching operations and weighting matching transactions using weak weight values in which the completion identifier value and the reversal identifier value are ignored;
forming a final result set of candidate transactions, ordering the final result set according to a magnitude of the match result values of the candidate transactions, and transmitting the final result set to another computer or programmatic process.

2. The method of claim 1, the particular transaction and the original transaction comprising digitally stored electronic messages in ISO 8583 format.

3. The method of claim 1 or 2, in which executing a plurality of transaction filter operations that implement base criteria comprises excluding the particular transaction, excluding old transactions, and filtering out transactions with irrelevant ISO 8583 coding.

4. The method of claim 1 or 2, in which executing a plurality of transaction filter operations that implement base criteria comprises executing one or more filter operations to filter out, exclude or remove, from the result set, certain transactions based upon a transaction type value of the particular transaction of a form, given a transaction type X, an original transaction must have an internal transaction code like Y, comprising:
given "Reversal," code shall be LIKE '1%,2%,4%';
given "Clearing," code shall be LIKE '1%,200%';
given "Auth advice" code shall be LIKE '1%,200%';
given "Incremental auth", code shall be LIKE '100%,200%';
given "Financial adjustment advice", code shall be LIKE '1%,2%';
given "Financial advice", code shall be LIKE '1%,200%';
given "Negative ack", code shall be LIKE '1%,2%'.

5. The method of any preceding claim, the first plurality of different value matching operations comprising checking network reference ID, checking retrieval reference ID, checking authorization digest or hash value, and certain combinations of approval code, ISO 8583 STAN value, and local transaction date.

6. The method of any preceding claim, the first plurality of different value matching operations comprising:
strongly weighting one of the candidate transactions when a network reference ID value matches the particular transaction;
strongly weighting one of the candidate transactions when a retrieval reference ID matches the particular transaction; and
strongly weighting one of the candidate transactions when an authorization digest or hash value matches the particular transaction.

7. The method of any preceding claim, further comprising strongly weighting one of the candidate transactions when an approval code matches the particular transaction, an ISO 8583 STAN value matches the particular transaction, and a local transaction date matches the particular transaction to exact date and time.

8. The method of any preceding claim, further comprising weakly weighting one of the candidate transactions in response to any one or more of:
a local transaction date matches to a value of date only, a merchant identification number of a card acceptor matches, and a transaction amount matches;
the local transaction date matches to a value of date only, the merchant identification number of a card acceptor matches, and the transaction amount matches with a positive variance of up to 25% or a negative variance of up to 25%;
the local transaction date matches to the value of date only within one day, the merchant identification number of a card acceptor matches, and transaction amount matches with a positive variance of up to 25% or a negative variance of up to 25%;
the merchant identification number of a card acceptor specifies any of: service stations; automated fuel dispensers; automobile parking lots and garages; car washes; towing services;
the transaction amount matches and the local transaction date matches to date only;
the original STAN value matches, original acquiring institution identifier matches, and original forwarding institutional identifier matches;
the STAN value matches and the retrieval reference number matches;
the acquirer reference identifier matches, the approval number matches, and the transaction amount matches with a positive variance of up to 25% or a negative variance of up to 25%.

9. The method of any preceding claim, in which executing the first pass of a second plurality of different value matching operations includes executing comparisons in the particular transaction and the candidate transactions of the result set of date values, merchant identifier values, transaction amount values, type of merchant values, and acquirer identifier values.

10. The method of any preceding claim, the request being one of thousands of other requests that the transaction processing server computer receives and processes concurrently in computer memory in real time.

11. A transaction processing server computer comprising one or more hardware processors, memory coupled to the one or more hardware processors, the memory storing sequences of instructions which when executed using the one or more hardware processors cause the one or more hardware processors to execute:
receiving data identifying a particular transaction, in association with a request to find the original transaction relating to the particular transaction;
transmitting a search query to a database and receiving a result set comprising thousands to millions of candidate transactions;
executing a plurality of transaction filter operations that implement base criteria for matching original transactions, to result in filtering the result set to exclude a plurality of the candidate transactions;
executing a first plurality of different value matching operations and to weight matching transactions using strong weight values;
executing a first pass of a second plurality of different value matching operations and weighting matching transactions using weak weight values, but excluding transactions in which a completion identifier value is set or in which a reversal identifier value is set;
executing a second pass of the second plurality of different value matching operations and weighting matching transactions using weak weight values in which the completion identifier value and the reversal identifier value are ignored;
forming a final result set of candidate transactions, ordering the final result set according to a magnitude of the match result values of the candidate transactions, and transmitting the final result set to another computer or programmatic process.

12. The transaction processing server computer of claim 11, the particular transaction and the original transaction comprising digitally stored electronic messages in ISO 8583 format.

13. The transaction processing server computer of claim 11 or 12, in which executing a plurality of transaction filter operations that implement base criteria comprises excluding the particular transaction, excluding old transactions, and filtering out transactions with irrelevant ISO 8583 coding.

14. The transaction processing server computer of claim 11 or 12, in which executing a plurality of transaction filter operations that implement base criteria comprises executing one or more filter operations to filter out, exclude or remove, from the result set, certain transactions based upon a transaction type value of the particular transaction of a form, given a transaction type X, an original transaction must have an internal transaction code like Y, comprising:
given "Reversal," code shall be LIKE '1%,2%,4%';
given "Clearing," code shall be LIKE '1%,200%';
given "Auth advice" code shall be LIKE '1%,200%';
given "Incremental auth", code shall be LIKE '100%,200%';
given "Financial adjustment advice", code shall be LIKE '1%,2%';
given "Financial advice", code shall be LIKE '1%,200%';
given "Negative ack", code shall be LIKE '1%,2%'.

15. The transaction processing server computer of any of claims 11 to 14, the first plurality of different value matching operations comprising checking network reference ID, checking retrieval reference ID, checking authorization digest or hash value, and certain combinations of approval code, ISO 8583 STAN value, and local transaction date.

16. The transaction processing server computer of any of claims 11 to 15, the first plurality of different value matching operations comprising:
strongly weighting one of the candidate transactions when a network reference ID value matches the particular transaction;
strongly weighting one of the candidate transactions when a retrieval reference ID matches the particular transaction; and
strongly weighting one of the candidate transactions when an authorization digest or hash value matches the particular transaction.

17. The transaction processing server computer of any of claims 11 to 16, further comprising strongly weighting one of the candidate transactions when an approval code matches the particular transaction, an ISO 8583 STAN value matches the particular transaction, and a local transaction date matches the particular transaction to exact date and time.

18. The transaction processing server computer of any of claims 11 to 17, further comprising weakly weighting one of the candidate transactions in response to any one or more of:
a local transaction date matches to a value of date only, a merchant identification number of a card acceptor matches, and a transaction amount matches;
the local transaction date matches to a value of date only, the merchant identification number of a card acceptor matches, and the transaction amount matches with a positive variance of up to 25% or a negative variance of up to 25%;
the local transaction date matches to the value of date only within one day, the merchant identification number of a card acceptor matches, and transaction amount matches with a positive variance of up to 25% or a negative variance of up to 25%;
the merchant identification number of a card acceptor specifies any of: service stations; automated fuel dispensers; automobile parking lots and garages; car washes; towing services;
the transaction amount matches and the local transaction date matches to date only;
the original STAN value matches, original acquiring institution identifier matches, and original forwarding institutional identifier matches;
the STAN value matches and the retrieval reference number matches;
the acquirer reference identifier matches, the approval number matches, and the transaction amount matches with a positive variance of up to 25% or a negative variance of up to 25%.

19. The transaction processing server computer of any of claims 11 to 18, in which executing the first pass of a second plurality of different value matching operations includes executing comparisons in the particular transaction and the candidate transactions of the result set of date values, merchant identifier values, transaction amount values, type of merchant values, and acquirer identifier values.

20. The transaction processing server computer of any of claims 11 to 19, the request being one of thousands of other requests that the transaction processing server computer receives and processes concurrently in computer memory in real time.

## Amended claims

### Amended claims in accordance with Rule 137(2) EPC.

1. A computer-implemented method of identifying an original transaction relating to a particular transaction, comprising:
using a transaction processing server computer, receiving data identifying a particular transaction, in association with a request to find the original transaction relating to the particular transaction;
transmitting, by the transaction processing server computer, a search query to a database to identify the original transaction, and receiving a result set comprising thousands to millions of candidate transactions for the original transaction;
executing a plurality of transaction filter operations that implement base criteria for matching original transactions, to result in filtering the result set to exclude a plurality of the candidate transactions;
executing a first plurality of different value matching operations and to weight matching transactions using strong weight values;
executing a first pass of a second plurality of different value matching operations and weighting matching transactions using weak weight values, but excluding transactions in which a completion identifier value is set or in which a reversal identifier value is set;
executing a second pass of the second plurality of different value matching operations and weighting matching transactions using weak weight values in which the completion identifier value and the reversal identifier value are ignored;
forming a final result set of candidate transactions for the original transaction, ordering the final result set according to a magnitude of the match result values of the candidate transactions;
identifying, from the final result set, a highest-order transaction as the original transaction relating to the particular transaction; and
transmitting the final result set to another computer or programmatic process.

2. The method of claim 1, the particular transaction and the original transaction comprising digitally stored electronic messages in ISO 8583 format.

3. The method of claim 1 or 2, in which executing a plurality of transaction filter operations that implement base criteria comprises excluding the particular transaction, excluding old transactions, and filtering out transactions with irrelevant ISO 8583 coding.

4. The method of claim 1 or 2, in which executing a plurality of transaction filter operations that implement base criteria comprises executing one or more filter operations to filter out, exclude or remove, from the result set, certain transactions based upon a transaction type value of the particular transaction of a form, given a transaction type X, an original transaction must have an internal transaction code like Y, comprising:
given "Reversal," code shall be LIKE '1%,2%,4%';
given "Clearing," code shall be LIKE '1%,200%';
given "Auth advice" code shall be LIKE '1%,200%';
given "Incremental auth", code shall be LIKE '100%,200%';
given "Financial adjustment advice", code shall be LIKE '1%,2%';
given "Financial advice", code shall be LIKE '1%,200%';
given "Negative ack", code shall be LIKE '1%,2%'.

5. The method of any preceding claim, the first plurality of different value matching operations comprising checking network reference ID, checking retrieval reference ID, checking authorization digest or hash value, and certain combinations of approval code, ISO 8583 STAN value, and local transaction date.

6. The method of any preceding claim, the first plurality of different value matching operations comprising:
strongly weighting one of the candidate transactions when a network reference ID value matches the particular transaction;
strongly weighting one of the candidate transactions when a retrieval reference ID matches the particular transaction; and
strongly weighting one of the candidate transactions when an authorization digest or hash value matches the particular transaction.

7. The method of any preceding claim, further comprising strongly weighting one of the candidate transactions when an approval code matches the particular transaction, an ISO 8583 STAN value matches the particular transaction, and a local transaction date matches the particular transaction to exact date and time.

8. The method of any preceding claim, further comprising weakly weighting one of the candidate transactions in response to any one or more of:
a local transaction date matches to a value of date only, a merchant identification number of a card acceptor matches, and a transaction amount matches;
the local transaction date matches to a value of date only, the merchant identification number of a card acceptor matches, and the transaction amount matches with a positive variance of up to 25% or a negative variance of up to 25%;
the local transaction date matches to the value of date only within one day, the merchant identification number of a card acceptor matches, and transaction amount matches with a positive variance of up to 25% or a negative variance of up to 25%;
the merchant identification number of a card acceptor specifies any of: service stations; automated fuel dispensers; automobile parking lots and garages; car washes; towing services;
the transaction amount matches and the local transaction date matches to date only;
the original STAN value matches, original acquiring institution identifier matches, and original forwarding institutional identifier matches;
the STAN value matches and the retrieval reference number matches;
the acquirer reference identifier matches, the approval number matches, and the transaction amount matches with a positive variance of up to 25% or a negative variance of up to 25%.

9. The method of any preceding claim, in which executing the first pass of a second plurality of different value matching operations includes executing comparisons in the particular transaction and the candidate transactions of the result set of date values, merchant identifier values, transaction amount values, type of merchant values, and acquirer identifier values.

10. The method of any preceding claim, the request being one of thousands of other requests that the transaction processing server computer receives and processes concurrently in computer memory in real time.

11. A transaction processing server computer comprising one or more hardware processors, memory coupled to the one or more hardware processors, the memory storing sequences of instructions which when executed using the one or more hardware processors cause the one or more hardware processors to execute:
receiving data identifying a particular transaction, in association with a request to find the original transaction relating to the particular transaction;
transmitting a search query to a database to identify the original transaction, and receiving a result set comprising thousands to millions of candidate transactions for the original transaction;
executing a plurality of transaction filter operations that implement base criteria for matching original transactions, to result in filtering the result set to exclude a plurality of the candidate transactions;
executing a first plurality of different value matching operations and to weight matching transactions using strong weight values;
executing a first pass of a second plurality of different value matching operations and weighting matching transactions using weak weight values, but excluding transactions in which a completion identifier value is set or in which a reversal identifier value is set;
executing a second pass of the second plurality of different value matching operations and weighting matching transactions using weak weight values in which the completion identifier value and the reversal identifier value are ignored;
forming a final result set of candidate transactions for the original transaction, ordering the final result set according to a magnitude of the match result values of the candidate transactions;
identifying, from the final result set, a highest-order transaction as the original transaction relating to the particular transaction; and
transmitting the final result set to another computer or programmatic process.

12. The transaction processing server computer of claim 11, the particular transaction and the original transaction comprising digitally stored electronic messages in ISO 8583 format.

13. The transaction processing server computer of claim 11 or 12, in which executing a plurality of transaction filter operations that implement base criteria comprises excluding the particular transaction, excluding old transactions, and filtering out transactions with irrelevant ISO 8583 coding.

14. The transaction processing server computer of claim 11 or 12, in which executing a plurality of transaction filter operations that implement base criteria comprises executing one or more filter operations to filter out, exclude or remove, from the result set, certain transactions based upon a transaction type value of the particular transaction of a form, given a transaction type X, an original transaction must have an internal transaction code like Y, comprising:
given "Reversal," code shall be LIKE '1%,2%,4%';
given "Clearing," code shall be LIKE '1%,200%';
given "Auth advice" code shall be LIKE '1%,200%';
given "Incremental auth", code shall be LIKE '100%,200%';
given "Financial adjustment advice", code shall be LIKE '1%,2%';
given "Financial advice", code shall be LIKE '1%,200%';
given "Negative ack", code shall be LIKE '1%,2%'.

15. The transaction processing server computer of any of claims 11 to 14, the first plurality of different value matching operations comprising checking network reference ID, checking retrieval reference ID, checking authorization digest or hash value, and certain combinations of approval code, ISO 8583 STAN value, and local transaction date.

16. The transaction processing server computer of any of claims 11 to 15, the first plurality of different value matching operations comprising:
strongly weighting one of the candidate transactions when a network reference ID value matches the particular transaction;
strongly weighting one of the candidate transactions when a retrieval reference ID matches the particular transaction; and
strongly weighting one of the candidate transactions when an authorization digest or hash value matches the particular transaction.

17. The transaction processing server computer of any of claims 11 to 16, further comprising strongly weighting one of the candidate transactions when an approval code matches the particular transaction, an ISO 8583 STAN value matches the particular transaction, and a local transaction date matches the particular transaction to exact date and time.

18. The transaction processing server computer of any of claims 11 to 17, further comprising weakly weighting one of the candidate transactions in response to any one or more of:
a local transaction date matches to a value of date only, a merchant identification number of a card acceptor matches, and a transaction amount matches;
the local transaction date matches to a value of date only, the merchant identification number of a card acceptor matches, and the transaction amount matches with a positive variance of up to 25% or a negative variance of up to 25%;
the local transaction date matches to the value of date only within one day, the merchant identification number of a card acceptor matches, and transaction amount matches with a positive variance of up to 25% or a negative variance of up to 25%;
the merchant identification number of a card acceptor specifies any of: service stations; automated fuel dispensers; automobile parking lots and garages; car washes; towing services;
the transaction amount matches and the local transaction date matches to date only;
the original STAN value matches, original acquiring institution identifier matches, and original forwarding institutional identifier matches;
the STAN value matches and the retrieval reference number matches;
the acquirer reference identifier matches, the approval number matches, and the transaction amount matches with a positive variance of up to 25% or a negative variance of up to 25%.

19. The transaction processing server computer of any of claims 11 to 18, in which executing the first pass of a second plurality of different value matching operations includes executing comparisons in the particular transaction and the candidate transactions of the result set of date values, merchant identifier values, transaction amount values, type of merchant values, and acquirer identifier values.

20. The transaction processing server computer of any of claims 11 to 19, the request being one of thousands of other requests that the transaction processing server computer receives and processes concurrently in computer memory in real time.
